# EUROPEAN PATENT SPECIFICATION

(11) **EP 3 429 764 B1**
(45) Date of publication and mention of the grant of the patent: **29.06.2022**
(21) Application number: 17713381.6
(22) Date of filing: 15.03.2017
(51) Int. Cl.: B05D 7/06, B05D 5/08, B32B 21/00, C09D 7/40, C09D 5/18, C08K 3/04, B82Y 30/00, B32B 21/14, B32B 21/13, B05D 5/00, B05D 7/00, B27K 5/02, C09D 15/00, C09D 1/00

(54) **MULTIFUNCTIONAL WOOD COATINGS**
MULTIFUNKTIONALE HOLZBESCHICHTUNGEN
REVÊTEMENTS POUR BOIS MULTIFONCTIONNELS

(30) Priority: 17.03.2016 GB 201604576
(43) Date of publication of application: 23.01.2019
(73) Proprietor: Levidian Nanosystems Limited, Cambridge, Cambridgeshire CB5 8HY (GB)
(72) Inventor: LEKAWA-RAUS, Agnieszka, Cambridge Cambridgeshire CB5 8HY (GB); KOZIOL, Krzysztof Kazimierz, Cambridge Cambridgeshire CB5 8HY (GB); LUKAWSKI, Damian, Cambridge Cambridgeshire CB5 8HY (GB); JAKUBOWSKA, Malgorzata, Cambridge Cambridgeshire CB5 8HY (GB); KRZEMINSKI, Jakub, Cambridge Cambridgeshire CB5 8HY (GB)
(74) Representative: Pitchford, James Edward
(86) International application number: PCT/GB2017/050700
(87) International publication number: WO 2017/158349

(56) References cited:
- WO-A1-2015/160764
- WO-A1-2015/160764
- WO-A1-2015/160764
- KR-A- 20100 094 812
- KR-A- 20100 094 812
- US-A1- 2010 003 488
- US-A1- 2010 003 488
- US-A1- 2015 315 404
- US-A1- 2015 315 404
- US-A1- 2015 315 404

## Description

### Field of the Invention

The present invention relates to the treatment of wood, in particular (but not exclusively) for the purpose of improving its fire retardancy, and also composite materials formed of treated wood.

### Background to the Invention

Wood has been widely used as a civil or structural engineering material for centuries, in a wide range of applications from housebuilding to furniture, but it is not a material of the past. To the contrary, it continues to be a basic material for a wide range of engineering applications, and it is highly likely that its low cost of production and processing will ensure that it remains a highly popular material in the following years. For example, in the western coast of the United States, wood is the basic material used in building 90% of houses. Moreover, wood is still the basic material used in furniture production, including outdoor furniture, which is exposed to harsh atmospheric conditions. Wood is also environmentally compatible, as it does not need to be recycled and is completely biodegradable.

However, wood has a number of serious disadvantages, including high flammability, poor water-resistance, susceptibility to biological or environmental decay (fungi, mould, bacteria, pollution, etc.), and susceptibility to ultraviolet (UV) radiation, which need to be tackled by the use of conservatives. Currently-available wood conservatives (examples of which are given in the Appendix towards the end of this document, together with typical application areas) are very often environmentally unfriendly, e.g. making wood difficult to recycle or toxic for humans. Moreover, increasing resistance in respect of one factor (e.g. flammability, water, UV or biological decay) often causes a worsening of one or more other factors.

Focussing more particularly on the issue of flammability, all the forms in which wood is used (e.g. pure wood, fibreboard, plywood, etc.) are flammable. In 2014, the number of domestic fires that occurred in the United States alone was 367,500, caused mostly by the flammability of wood-based materials. The simplicity and low cost of fibreboard production and woodwork compared to other building materials suggests that there will be no decrease in the use of wood any time soon. Wood preservatives or wood paints must therefore be developed in order to eliminate the disadvantages of wood. However, as is evident from the Appendix, fire retardant preservatives or coatings are often produced from toxic or environmentally unfriendly chemicals such as polybrominated diphenyl ether (PBDE). Other more environmentally friendly paints are being developed but all of them are far from the ideal scenario where fibreboards or preserved wood consist of only natural or biodegradable materials. In some applications expanded (or "expanding" or "expandable") graphite has been used as an intumescent agent which causes fire retardancy by accelerated char formation. However, the production of expanded graphite involves the use of harsh toxic materials (e.g. acids) and so is not industrially viable and is not well suited for use with wood. Other issues associated with the use of expanded graphite include the emission of environmentally unfriendly gases when it burns, that on application it completely changes the colour of the underlying material to black, that it can be difficult to apply to the underlying material, and that it can be unreliable as a fire retardant material.

There is therefore a desire for an improved way of treating wood. In particular, there is a desire for a multifunctional treatment which provides increased resistance to flammability whilst also providing increased resistance to one or more of the other factors mentioned above.

The term "wood" as used herein should be interpreted broadly, to encompass not only pure wood (i.e. as directly obtained from a tree), but also wood composites and engineered wood products such as fibreboard, plywood and chipboard, for example.

Background art is provided in US 2015/315404 A1 and WO 2015/160764 A1.

US 2015/315404 A1 discloses a composition for coating a substrate comprising: a nanomaterial; a binder; and a solvent that at least partially dissolves the binder; wherein the binder binds the nanomaterials together to form a continuous nanostructured coating, and wherein the binder binds the coating to the substrate. WO 2015/160764 A1 discloses coatings comprising functionalized graphene(s) and polymers (resins). US2010003488 and KR20100094812 disclose a method for forming a composite wood structure with a carbon nanomaterial coated on the wood.

### Summary of the Invention

The present invention is defined in the appended independent claims. Details of certain embodiments are set out in the dependent claims.

According to a first aspect of the present disclosure there is provided a method of improving the fire retardancy and/or water resistance of wood, the method comprising applying a carbon nanomaterial coating to a wooden element (the wooden element being an element formed of said wood).

The term "wooden element" should be interpreted broadly, to encompass not only a single piece of wood, but also a plurality of pieces of wood (and potentially other components too) in combination.

Optional features are defined in the dependent claims.

Thus, the method may further comprise a preliminary step of preparing or obtaining a dispersion comprising a liquid and a quantity of one or more carbon nanomaterials, and applying the dispersion to the surface of the wooden element to thereby form the carbon nanomaterial coating.

The dispersion may comprise from 0.001wt% to approximately 10wt% of carbon nanomaterials. For example, the dispersion may comprise from 0.01wt% to approximately 10wt% of carbon nanomaterials, or from 0.1wt% to approximately 10wt% of carbon nanomaterials, or from 1wt% to approximately 10wt% of carbon nanomaterials.

The liquid used to form the dispersion may be any suitable liquid, such as any of: trichloromethane; poly(methyl methacrylate); acetone; nitromethane; water; linseed oil; inorganic solvents; polymers.

If required, the dispersion may further comprise a surfactant (which is particularly advantageous if the liquid is water).

Alternatively, or in addition, the dispersion may further comprise a binder (e.g. cellulose) to enhance the binding of the carbon nanomaterials to the wood.

Applying the dispersion to the surface of the wooden element may be performed using any suitable technique, such as any of: dipping/steeping; painting/brushing; spray coating; temperature-assisted coating; pressure/vacuum assisted coating. Advantageously, the dispersion may be incorporated into an existing product such as a varnish, wood stain, paint or primer/undercoat, so as to provide said product with the additional functionality (i.e. improved fire retardancy and/or water resistance) conferred by the presence of the carbon nanomaterials.

According to the invention the carbon nanomaterial(s) comprise graphene.

In addition, the carbon nanomaterial(s) may comprise carbon nanotubes.

Alternatively, or in addition, the carbon nanomaterial(s) may comprise one or more nanomaterials selected from a group comprising: graphene oxide; functionalized nanocarbon forms; fullerenes; herringbone nanotubes; carbon nanocones/nanohorns.

Thus, a mixture of different types of carbon nanomaterials may be used within the coating. Other constituents may also be present within the coating material. Merely as one example, ZnS may be mixed with graphene to form the coating. The carbon nanomaterial coating may comprise at least 10% by volume of carbon nanomaterials. For example, the carbon nanomaterial coating may comprise at least 30% by volume of carbon nanomaterials, or at least 50% by volume of carbon nanomaterials.

The carbon nanomaterial coating may have a thickness in the range of 0.5 nm to 1 mm. For example, the carbon nanomaterial coating may have a thickness in the range of 10 nm to 1 mm, or in the range of 100 nm to 1 mm, or in the range of 1 µm to 1 mm.

As well as providing improved fire retardancy and/or improved water resistance, the carbon nanomaterial coating may further provide the wood with increased resistance to ultraviolet light absorption and/or increased resistance to biological or environmental decay.

To achieve even greater fire retardancy in respect of the wood, the carbon nanomaterial coating are applied to a plurality of wooden elements, and the method further comprises using the plurality of coated wooden elements to form a composite structure having one or more carbon nanomaterial layers or planes within the structure, the carbon nanomaterial coatings of the wooden elements forming the carbon nanomaterial layers or planes within the structure.

Such a composite structure exhibits enhanced fire retardancy by virtue of the carbon nanomaterial layers or planes within the structure. It should be noted that the carbon nanomaterial layers within the structure need not be flat, and also each layer need not be continuous across or through the structure.

In one variant the carbon nanomaterial layers or planes may be oriented transversely within the composite structure. In another variant the carbon nanomaterial layers or planes may be oriented longitudinally within the composite structure.

According to a second aspect of the present disclosure there is provided a wooden element having a carbon nanomaterial coating thereon, the carbon nanomaterial coating providing improved fire retardancy and/or water resistance to the wood of which the wooden element is formed.

The carbon nanomaterial coating may comprise at least 10% by volume of carbon nanomaterials. For example, the carbon nanomaterial coating may comprise at least 30% by volume of carbon nanomaterials, or at least 50% by volume of carbon nanomaterials.

The carbon nanomaterial coating may further comprise a binder (e.g. cellulose) to enhance the binding of the carbon nanomaterials to the wood.

The carbon nanomaterial coating comprises graphene and may comprise any of the carbon nanomaterials mentioned above (and any combination thereof).

The carbon nanomaterial coating may have a thickness in the range of 0.5 nm to 1 mm. For example, the carbon nanomaterial coating may have a thickness in the range of 10 nm to 1 mm, or in the range of 100 nm to 1 mm, or in the range of 1 µm to 1 mm.

As well as providing improved fire retardancy and/or improved water resistance, the carbon nanomaterial coating may further provide the wooden element with increased resistance to ultraviolet light absorption and/or increased resistance to biological or environmental decay.

According to an aspect of the invention there is provided a composite structure comprising a plurality of wooden elements in accordance with the second aspect of the disclosure wherein the carbon nanomaterial coatings of the wooden elements form carbon nanomaterial layers or planes within the composite structure. Such a composite structure exhibits enhanced fire retardancy by virtue of the carbon nanomaterial layers or planes within the structure. The carbon nanomaterial layers or planes may for example be oriented transversely or longitudinally within the composite structure. As mentioned above, the carbon nanomaterial layers within the structure need not be flat, and also each layer need not be continuous across or through the structure.

According to an aspect of the present disclosure there is provided a dispersion for application to wood, to improve the fire retardancy and/or water resistance of the wood, the dispersion comprising a liquid and a quantity of one or more carbon nanomaterials.

As mentioned above, the dispersion may comprise from 0.001wt% to approximately 10wt% of carbon nanomaterials. For example, the dispersion may comprise from 0.01wt% to approximately 10wt% of carbon nanomaterials, or from 0.1wt% to approximately 10wt% of carbon nanomaterials, or from 1wt% to approximately 10wt% of carbon nanomaterials.

The liquid used to form the dispersion may be any suitable liquid, such as any of: trichloromethane; poly(methyl methacrylate); acetone; nitromethane; water; linseed oil; inorganic solvents; polymers.

If required, the dispersion may further comprise a surfactant (which is particularly advantageous if the liquid is water).

Alternatively, or in addition, the dispersion may further comprise a binder (e.g. cellulose) to enhance the binding of the carbon nanomaterials to the wood.

The dispersion may comprise any of the carbon nanomaterials mentioned above (and any combination thereof).

According to an aspect of the present disclosure there is provided a product comprising a dispersion in accordance with the fourth aspect, the product being selected from a group comprising: varnish; wood stain; paint; primer/undercoat. Thus, by virtue of the carbon nanomaterials within the dispersion, such a product is able to provide wood with improved fire retardancy and/or water resistance, in addition to varnishing, staining, painting or priming the wood.

According to an aspect of the present disclosure there is provided use of a carbon nanomaterial coating to improve the fire retardancy and/or water resistance of wood.

As mentioned above, the carbon nanomaterial coating may comprise at least 10% by volume of carbon nanomaterials. For example, the carbon nanomaterial coating may comprise at least 30% by volume of carbon nanomaterials, or at least 50% by volume of carbon nanomaterials.

The carbon nanomaterial coating may further comprise a binder (e.g. cellulose) to enhance the binding of the carbon nanomaterials to the wood.

The carbon nanomaterial coating may comprise any of the carbon nanomaterials mentioned above (and any combination thereof).

The carbon nanomaterial coating may have a thickness in the range of 0.5 nm to 1 mm. For example, the carbon nanomaterial coating may have a thickness in the range of 10 nm to 1 mm, or in the range of 100 nm to 1 mm, or in the range of 1 µm to 1 mm.

As well as providing improved fire retardancy and/or improved water resistance, use of the carbon nanomaterial coating may further provide the wood with increased resistance to ultraviolet light absorption and/or increased resistance to biological or environmental decay.

### Brief Description of the Drawings

Embodiments of the invention will now be described, by way of example only, and with reference to the drawings in which:
Figure 1 shows (a) a photograph of, on the right, a piece of uncoated balsa, and on the left, a piece of balsa coated with graphene ("GrBalsa"); (b)-(c) scanning electron microscope (SEM) images of the graphene coating on the balsa surface in two different places on the sample; and (d)-(f) fluorescence microscopy images (2.7x2.1 mm) of (d) uncoated balsa, (e) graphene-coated balsa (prepared using a 0.01wt% graphene dispersion), and (f) graphene-coated balsa (prepared using a 0.1wt% graphene dispersion);
Figure 2 is a cross-sectional schematic illustration of a piece of wood having a carbon nanomaterial based coating;
Figure 3 is a cross-sectional schematic illustration of a plurality of coated pieces of wood (as per Figure 2) in a stack;
Figure 4 is a cross-sectional schematic illustration of a length of wood having a carbon nanomaterial based coating;
Figures 5a and 5b are schematic illustrations (cross-sectional and perspective, respectively) of a plurality of coated lengths of wood (as per Figure 4) bunched together;

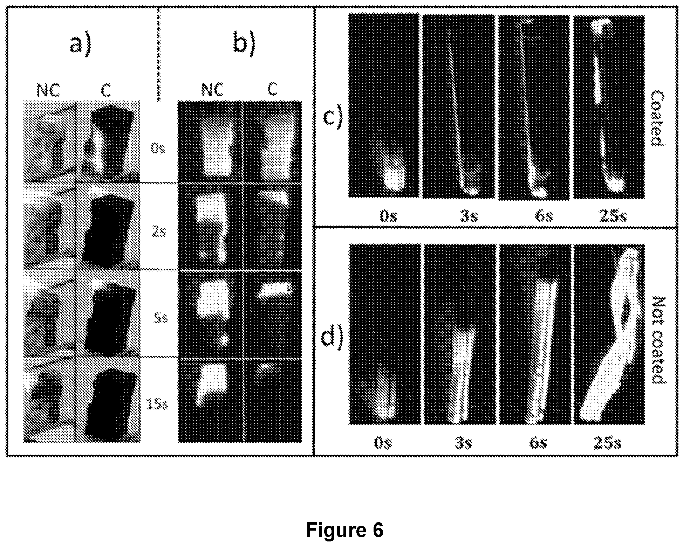

Figure 6 shows (a), on the left, a sequence of time-lapse images from a video camera of vertically-stacked uncoated balsa blocks ("V-Balsa") during burning, and on the right, corresponding images of vertically-stacked graphene-coated balsa blocks ("V-GrBalsa") during burning; (b) corresponding thermal camera time-lapse images of V-Balsa (left) and V-GrBalsa (right) during burning; (c) thermal camera time-lapse images of horizontally-bundled graphene-coated balsa sticks ("H-GrBalsa") burning; and (d) corresponding thermal camera time-lapse images of horizontally-bundled uncoated balsa sticks ("H-Balsa") burning;
Figure 7a is a plot showing changes of sample temperature with time for uncoated (upper line) and graphene-coated (lower line) wood samples measured by Mini Fire Tube;
Figure 7b is a plot showing changes of sample mass with time for uncoated (upper line) and graphene-coated (lower line) wood samples measured by Mini Fire Tube;
Figure 8 shows (a) variation with time of the contact angle of a water droplet on uncoated balsa; (b) variation with time of the contact angle of a water droplet on GrBalsa; and (c) a plot showing UV reflectance of uncoated balsa (upper line) and GrBalsa (lower line);
Figure 9 is a scanning electron microscope (SEM) image of a sample of multi-walled carbon nanotubes;
Figure 10 shows wooden samples, on each of which a layer of carbon nanotubes dispersed in a PMMA carrier had been applied by screen printing;
Figure 11 is a thermal image of a sample from Figure 11 during layer cooling;
Figure 12 shows a match with a carbon nanotube layer in laboratory pliers (left-hand photograph) and in a grip (right-hand photograph);
Figure 13 is a thermal image of the lighting of a carbon nanotube-coated match (as per Figure 12);
Figure 14 is a thermal image of the match of Figure 13, sheowing fire extinguishing taking place in contact with the carbon nanotube layer;
Figure 15 is a thermal image of the lighting of a normal untreated match;
Figure 16 is a thermal image of the match of Figure 15 continuously burning; and
Figure 17 shows a wood sample on which a coating of carbon nanotubes dispersed in nitromethane and ethylocellulose had been applied by spray coating.

In the figures, like elements are indicated by like reference numerals throughout.

### Detailed Description of Preferred Embodiments

The present embodiments represent the best ways known to the Applicant of putting the methods according to the disclosure into practice. However, they are not the only ways in which this can be achieved.

### Overview

Carbon nanomaterials (such as graphene and carbon nanotubes) are multifunctional structures characterised by relatively high fire resistance, high hydrophobicity, high UV light absorbance, thermoelectric conductivity, and gas and microbe barrier properties. Additionally, carbon nanomaterials are becoming less expensive and more readily available, which gives good prospects for their use in large scale coatings.

It should be noted that, in the present work, and in accordance with commonly-accepted usage, the term "carbon nanomaterial" does not encompass graphite.

In the present work we disclose that carbon nanomaterials may be used as a multifunctional coating for wood, to decrease its flammability whilst simultaneously improving its resistance to one or more of water, UV light and microbes, and whilst not deteriorating its performance (e.g. its strength). Additionally, the presently-described way of applying coatings has the potential to be inexpensive, environmentally friendly and easy to recycle.

To prove this, we have successfully produced carbon nanomaterial coatings on wood and have tested them as functional coatings. In particular, as described in the specific examples below, in the present work we have focused on coatings for wood based on (i) graphene, and (ii) carbon nanotubes, but the present principles are equally expected to apply to coatings for wood based on a combination of graphene and carbon nanotubes. The present principles are also expected to apply to coatings for wood based on other carbon nanomaterials such as graphene oxide, functionalized nanocarbon forms, fullerenes, herringbone nanotubes, carbon nanocones/nanohorns, and any combination thereof (including in any combination with graphene and/or carbon nanotubes).

### Composite materials and structures comprising wood and carbon nanomaterial coatings

The present work provides carbon nanomaterial-coated wood - which may be considered, in a broad sense, to be a composite material - primarily for the purpose of improving the fire retardancy of the wood, whilst simultaneously improving its resistance to one or more of water, UV light and microbes.

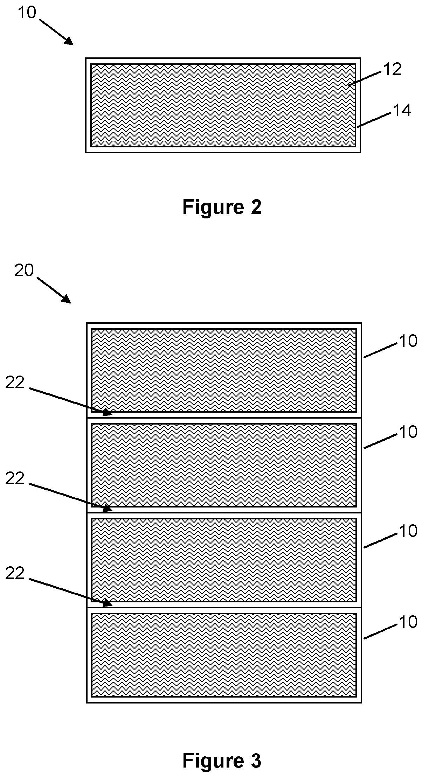

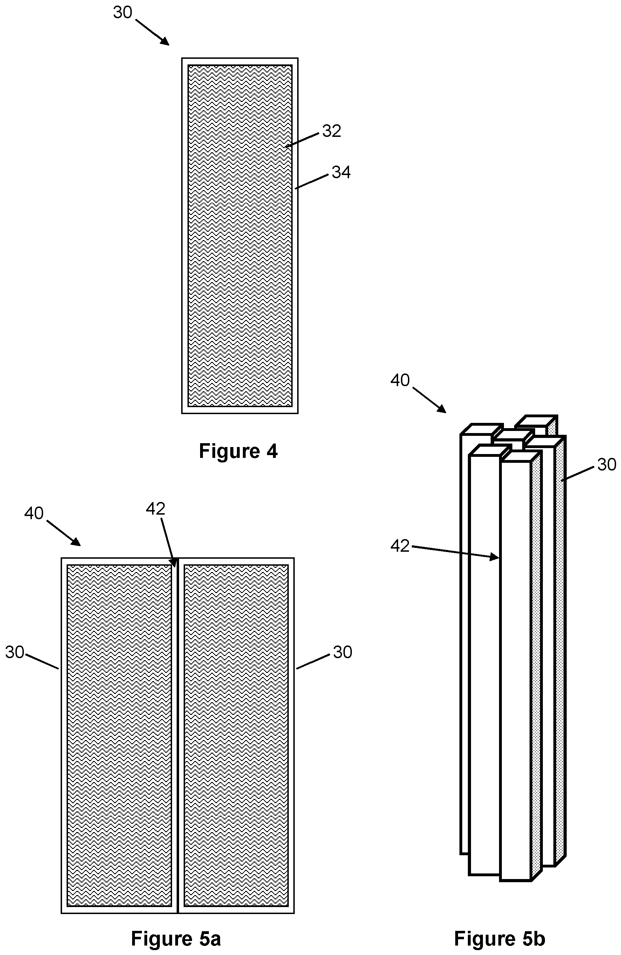

More particularly, as illustrated for example in Figures 2 and 4, in some examples the composite material 10, 30 comprises a wooden element 12, 32 (e.g. a structural component of some kind) to which a carbon nanomaterial coating 14, 34 has been applied to the outer surface of the wooden element 12, 32.

In other examples as illustrated for example in Figures 3, 5a and 5b, the composite material 20, 40 comprises a wooden structure having one or more carbon nanomaterial layers or planes 22, 42 within the structure. The nanomaterial layers or planes may be oriented transversely within the structure (e.g. as illustrated by layers 22 in Figure 3), or may be oriented longitudinally within the structure (e.g. as illustrated by layers 42 in Figures 5a and 5b).

As exemplified below, such layered structures 20, 40 may be produced by preparing a plurality of individual carbon nanomaterial-coated wooden elements 10, 30 and then joining those elements together to form the structure 20, 40. In such a manner the carbon nanomaterial coatings 14, 34 of the individual elements 10, 30, where adjacent elements come together, form the carbon nanomaterial layers or planes 22, 42 within the structure 20, 40. However, it should be noted that carbon nanomaterial layers or planes may be formed within the structure as a result of only some of the wooden elements having a carbon nanomaterial coating (e.g. by using an alternating sequence of coated and uncoated wooden elements to form the structure). Also, the carbon nanomaterial layers within the structure need not be flat, and each layer need not be continuous across or through the structure.

It should be noted that the term "carbon nanomaterial coating" as used herein does not preclude the presence of other species within the coating, such as a binder, for example, or a residual species from the processing route that was used to prepare the coating (e.g. a surfactant).

### Carbon nanomaterial dispersion compositions

To coat wood with a carbon nanomaterial coating, a carbon nanomaterial dispersion is first prepared. The dispersion comprises a liquid, and from 0.001wt% to approximately 10wt% of carbon nanomaterials. For example the carbon nanomaterial content in the dispersion may be from 0.01wt% to approximately 10wt%. Alternatively the carbon nanomaterial content in the dispersion may be from 0.1wt% to approximately 10wt%. As a further alternative, the carbon nanomaterial content in the dispersion may be from 1wt% to approximately 10wt%.

The carbon nanomaterial dispersion may be produced using any suitable liquid, such as:
- trichloromethane (chloroform)
- PMMA (poly(methyl methacrylate))
- acetone
- nitromethane
- water
- linseed oil
- inorganic solvents
- polymers

The carbon nanomaterials dispersed in the liquid may comprise one or more of the following:
- graphene
- carbon nanotubes
- graphene oxide
- functionalized nanocarbon forms
- fullerenes
- herringbone nanotubes
- carbon nanocones/nanohorns, etc.

If required, a surfactant may be included in the dispersion (particularly if the liquid is water). Alternatively, or in addition, a binder (such as cellulose) may be included, to enhance the binding of the carbon nanomaterial to the wood. In this respect, we have found that wood will hold the carbon nanomaterial without the use of a binder, but a binder may be used in order to increase the amount of carbon nanomaterial that is bound to the wood. We have found that the use of a binder is particularly beneficial if carbon nanotubes are used as the carbon nanomaterial.

The dispersion may be incorporated into an existing product such as a varnish, wood stain, paint or primer/undercoat, so as to provide said product with the additional functionality conferred by the presence of the carbon nanomaterials.

### Application of the carbon nanomaterial dispersion to wood

To form a carbon nanomaterial coating on the wood, the carbon nanomaterial dispersion may be applied to the wood by standard coating techniques such as:
- dipping/steeping
- painting/brushing (if the liquid has a high viscosity, brushing is easier than dipping)
- spray coating
- temperature-assisted coating (e.g. Gedrian's bath)
- pressure/vacuum assisted coating

The carbon nanomaterial dispersion may be applied to any type of wood including (but not limited to) pine, balsa, oak, willow, ash, cedar, cypress, fir, spruce, elm, chicory, beech, etc. The carbon nanomaterial dispersion may also be applied to wood composites and engineered wood products such as fibreboard, plywood and chipboard, for example.

### Carbon nanomaterial coating compositions

Once the carbon nanomaterial dispersion has been applied to wood and dried, the resulting carbon nanomaterial coating on the wood comprises at least 10% by volume (i.e. 10vol%) of carbon nanomaterials. For example, the resulting carbon nanomaterial coating on the wood may comprise at least 30% by volume (i.e. 30vol%) of carbon nanomaterials. Alternatively, and preferably, the resulting carbon nanomaterial coating on the wood may comprise at least 50% by volume (i.e. 50vol%) of carbon nanomaterials. As noted above, the carbon nanomaterials may comprise one or more of the following:
- graphene
- carbon nanotubes
- graphene oxide
- functionalized nanocarbon forms
- fullerenes
- herringbone nanotubes
- carbon nanocones/nanohorns, etc.

Whilst in practice there is some variation in the thickness of the carbon nanomaterial coating on the wood, typical coating thicknesses are in the range of 0.5 nm (single layer graphene) to 1 mm. For example, coating thicknesses in the range of 10 nm to 1 mm may be produced, or in the range of 100 nm to 1 mm, or in the range of 1 µm to 1 mm.

In respect of the wood, the carbon nanomaterial coatings improve one or more of:
- fire retardancy / flame resistance
- water resistance (by virtue of the carbon nanomaterial stopping water from both wetting the wood and soaking into it)
- UV light resistance (by virtue of the carbon nanomaterial absorbing the UV)
- resistance to chemicals (e.g. acids)
- resistance to environmental decay, fouling and microorganisms (fungi, mould, bacteria, etc.)
- electrical and thermal conductivity (within the plane of the coating)

Some specific examples of carbon nanomaterial coatings on wood, based on (i) graphene, and (ii) carbon nanotubes, will now be discussed.

### (i) Graphene-based coatings on wood

### Introduction

Graphene is one of the most promising nanomaterials. Its special electrical, thermal and mechanical properties are widely researched in nanoscale, mostly as potential nanoelectronic components. However, those properties are also partly scalable to macroscale, in particular as coatings or composites. Graphene and graphene oxide have already been tested in respect of providing protection from wear, scratching, corrosion and others [1]. Moreover, graphene enforced composites seem very promising if the size of the graphene flakes exceeds 10 µm [2]. Liquid phase and thermal exfoliation production methods may be used to produce graphene in large amounts, which may be used in coatings or composites [1]. However, graphene has hitherto not been considered for the purpose of enhancing fire retardancy of wood. Indeed, only limited research has previously been carried out in relation to applying graphene to wood, for the specific purpose of providing enhanced UV resistance to wood [3].

In the present work we disclose graphene-based coatings as an environmentally friendly way of making wood fire retardant, whilst also providing increased resistance to one or more other factors. Graphene exhibits a number of properties that make it well suited for use in fire retardant / flame resistant materials, as it is very stable, even at 2400K in inert atmosphere. Moreover, its high thermal conductivity (up to 5300 W/mK) and high dissipating capability are very promising in the case of rapid heat distribution during fire. Furthermore, the reduction of toxic gases that would otherwise be released during burning is a very important environmental factor.

Graphene-based coatings for wood may be used not only for the purposes of fire retardancy. Periodically patterned graphene shows 100% light absorption [4], so it may also be used on wood as a barrier to UV light [3]. Moreover, as graphene-based materials are hydrophobic [5], a graphene-based coating on wood provides improved water resistance or waterproofing.

### Experimental demonstration of graphene-based coatings on wood

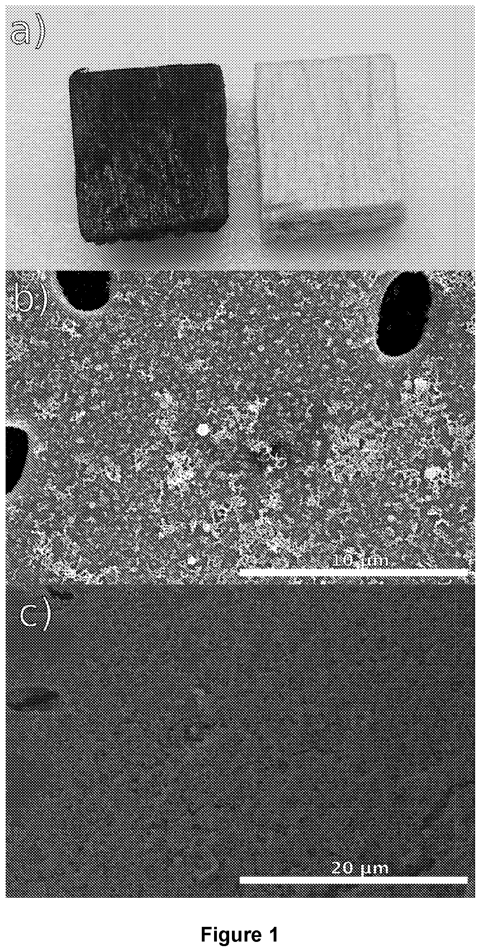

In this work we describe the protective properties of graphene-coated wood and other graphene/wood composites. The graphene material used, in the form of graphene nanoplatelet (GNP) powder, was produced by FGV Cambridge Nanosystems Limited and is commercially available under the brand name CamGraph (RTM). The powder showed a 99.8% carbon purity and contained graphene with an average diameter of 300 nm (from 150 nm to 500 nm) and a thickness of up to 5 nm. The average conductivity measured by the pellet method was equal to 5000 S/m. The size and shape of the graphene nanoplatelets is shown in Figure 1b.

For flaming tests, balsa wood was chosen as it is an extremely flammable material, although the present coating materials and techniques are equally applicable to other types of wood. Three different protective properties of graphene-coated balsa were investigated: fire retardancy, water resistance, and UV light resistance.

To coat the balsa wood, a graphene dispersion was first prepared by dissolving graphene powder in trichloromethane (chloroform), making a 0.03-0.3wt% solution. The dispersion was sonicated in a Branson digital sonifier 450 for 90 minutes. Afterwards, the balsa pieces were immersed into the dispersion and sonicated for an extra hour in order to obtain a uniform coating and to avoid clustering on the surface of wood. The wood pieces were left in the dispersion from 4 hours up to 3 days to obtain a uniform distribution of graphene flakes, then removed and allowed to dry. This method is a slightly modified immersion technique used for industrial timber treatment.

Figure 2 shows a cross-sectional schematic illustration of a piece of graphene-coated wood 10, comprising wood 12 having a graphene-based coating 14 thereon.

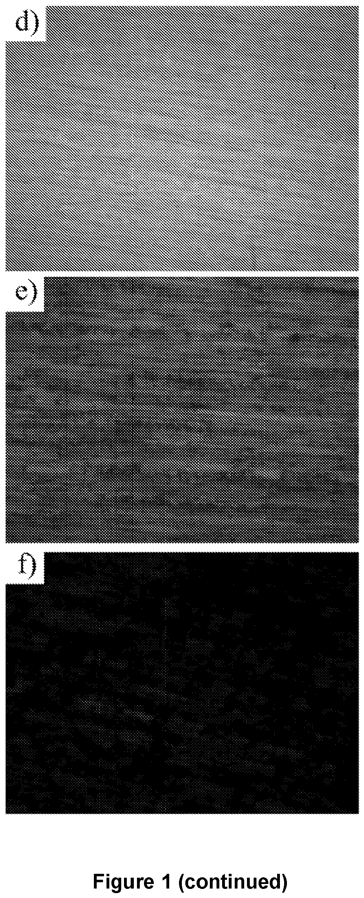

Optical examination (Figure 1a), SEM analysis (Figures 1b and 1c) performed using an FEI Nova NanoSEM, and fluorescence microscopy (Figures 1d, 1e and 1f) show that the present method gives a good distribution of graphene on the surface of the wood, with a particularly thorough coating being obtained using a 0.1wt% graphene dispersion (Figure 1f). It can be seen that graphene was deposited on the surface of the balsa as well as the sides of the balsa pores.

### Fire retardancy tests for graphene-based coatings on wood

For fire retardancy tests, three different types of wood/graphene composite test pieces are disclosed, as follows:

### 1. Piece of graphene-coated wood

The first type of wood/graphene composite tested was a piece of graphene-coated balsa ("GrBalsa") with dimensions of 10×10×7 mm. In order to check the flame protective coating, the burning tests were performed using a video camera and a thermal camera (FLIR SC3000) and the data was analysed using the FLIR Tools software. The experiments were conducted in a fume cupboard with a constant air speed of 0.7 m/s, which corresponds to a very light wind. The inflammation was performed with the use of butane burner. For every piece of GrBalsa that was tested, a reference non-coated balsa sample was also tested at the same time.

Figure 1a shows a piece of uncoated balsa (on the right) and a piece of GrBalsa (on the left), placed on a metal plate with a small distance between them. The samples were then inflamed. The process of burning was recorded with the video camera and the thermal camera. A flame was held between the blocks until ignition, and the time of inflammation after putting the blocks into the flame was almost negligible (less than one second).

The results show that although GrBalsa ignited as quickly as the reference uncoated balsa, its temperature dropped much faster and so a potential fire would take much less time. Three pairs of blocks were tested in the same way using the thermal camera. Although the general behaviour was not identical, some conclusions can be drawn. The temperature immediately after ignition was similar for GrBalsa (260±95°C) and uncoated balsa (270±90°C). However, a significant difference was observed after a period of 15s, where GrBalsa showed a temperature of 180±130°C, while uncoated balsa did not show any decrease and was at 270±120°C. Moreover for other samples the same experiment was performed in order to study the weight loss (as an indicator of the extent to which the sample had burnt). While the weight loss measured over five pairs of samples was 61±7% for uncoated balsa, it was only 15±4% for GrBalsa.

### 2. Vertical stack of graphene-coated wood pieces

The second type of wood/graphene composite tested was a vertical stack of four graphene-coated balsa pieces ("V-GrBalsa"), each piece coated in the same way as described above. Figure 3 shows a cross-sectional schematic illustration of such a stack 20, comprising four graphene-coated wood pieces 10 (as per Figure 2). In each place where adjacent graphene-coated pieces 10 touch, the graphene coatings essentially form a transverse graphene plane 22 extending through the stack 20. Although in our experiments only four graphene-coated balsa pieces 10 were used per stack 20, the general behaviour is expected to remain the same for other constructions. The reason for the testing of this composite was to assess fire propagation in composite wood blocks that are transversely (e.g. horizontally) divided with graphene planes 22, e.g. of the form illustrated in Figure 3.

The burning dynamics of the V-GrBalsa and reference V-Balsa ("V-Balsa" referring to a reference stack of uncoated balsa blocks) were recorded with the video camera and the thermal camera, and time lapse images obtained after 0s, 2s, 5s and 15s from ignition are shown in Figure 6a (video camera images) and Figure 6b (thermal camera images). At the moment of ignition (0s), the V-Balsa and V-GrBalsa behave identically and the whole stock was ignited immediately. 2s after ignition, the behaviour was similar and only the highest block in the stack was on fire. However, the dynamics of the process are dramatically different afterwards. After 5s, the flame in the V-Balsa spread and almost half of the structure was on fire, while the flame in the V-GrBalsa was only visible on the very top of the stack. An even more significant difference was observed after 15s, when the V-GrBalsa was completely extinguished whereas over half of the V-Balsa was on fire. The visual observation was correlated with numerical results obtained from thermal camera images. Although the temperature in the first 2s was similar, it dropped after 5s from 248°C to 125°C for the V-GrBalsa, while the V-Balsa increased slightly from 254°C to 272°C. Another highly differing factor was the average temperature of the second block from the top. For V-GrBalsa samples, the temperature dropped rapidly from 385°C, at the moment of ignition, to 73°C after 5s, and subsequently decreased. On the other hand, with the V-Balsa samples the temperature increased from 332°C at the moment of ignition to 506°C after 5s, and the same temperature was measured 40s after ignition.

### 3. Horizontally-tied bunch of graphene-coated wood pieces

The third type of wood/graphene composite tested was comprised six graphene-coated long balsa sticks that were horizontally tied-up into a bunch ("H-GrBalsa"), with the size of each stick being 3×3×80 mm. Figure 4 shows a cross-sectional schematic illustration of a single stick of graphene-coated wood 30, comprising wood 32 having a graphene-based coating 34 thereon. Figures 5a and 5b illustrate such sticks 30 forming a bunch 40. In each place where adjacent graphene-coated sticks 30 touch, the graphene coatings form a longitudinal (e.g. vertical) graphene plane 42 extending throughout the length of the bunch 40. Such bunches of sticks with vertically-touching graphene-coated planes enables us to assess fire propagation when vertical propagation is only slightly limited, e.g. of the form illustrated in Figures 5a and 5b.

The burning dynamics of the H-GrBalsa and reference H-Balsa ("H-Balsa" referring to a reference bunch of uncoated balsa sticks) were recorded with the thermal camera, and time lapse images obtained after 0s, 3s, 6s and 25s from ignition are shown in Figure 6c (H-GrBalsa) and Figure 6d (H-Balsa). In both cases the bottom of the bunch inflamed almost immediately after setting fire (0s). In the next few seconds, the dynamics of flame propagation were completely different for H-GrBalsa (Figure 6c) and H-Balsa (Figure 6d). After 3s, all the pure balsa sticks (H-Balsa) had half the stick on fire. However, in the H-GrBalsa, only one out of the six sticks was set on fire, with the flame reaching only about 1 cm from the bottom. The average temperature measured on the vertical axis of the bunch was equal to 85°C for the H-GrBalsa composite, compared to 351°C for pure wood (H-Balsa). After 6s the trend continued and the H-Balsa was almost completely on fire with an average temperature of 417°C, while the H-GrBalsa was almost in the same condition as 3s earlier with 89°C. Although the differences after a few seconds were significant, the most interesting stage was the final part of the burning. The H-GrBalsa after 25s was only slightly more ignited than after 6s, whereas the H-Balsa sticks were completely burnt.

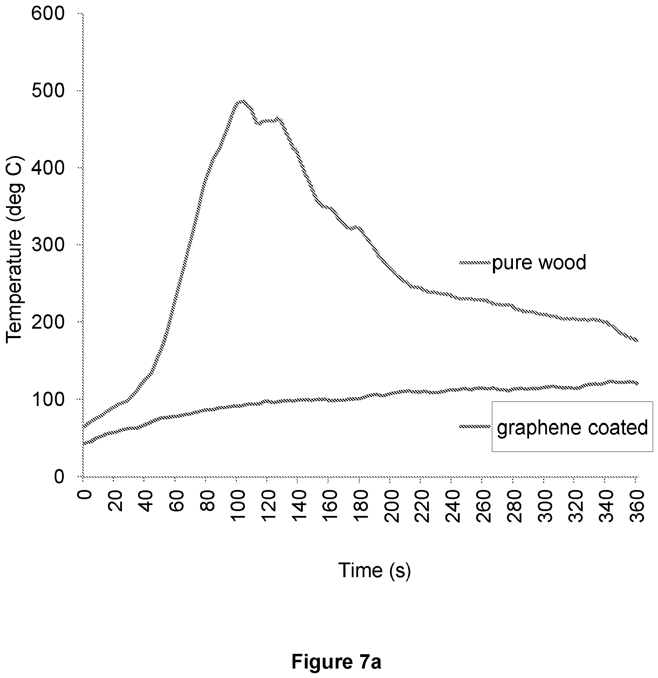

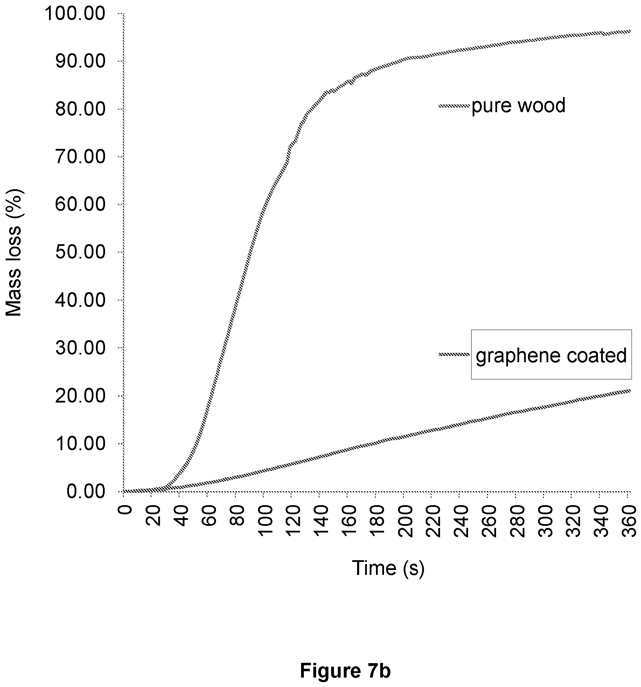

These results were confirmed by Mini Fire Tube, which is a standard experimental procedure for testing flammability of solid samples including wood. For these tests pine wood was coated with graphene using the procedure described above, and both uncoated and coated samples were analyzed. As shown in Figures 7a and 7b, the presence of the graphene coating causes a significant reduction in both sample temperature (Figure 7a) and weight loss (Figure 7b) over time. Thus, the results of Figures 7a and 7b show that the graphene-coated wood samples burnt significantly less, and at a much slower rate, than the uncoated counterparts.

In summary, therefore, these tests show that graphene-coated wood has improved fire retardancy compared to corresponding pieces of uncoated wood.

### Waterproofing tests for graphene-based coatings on wood

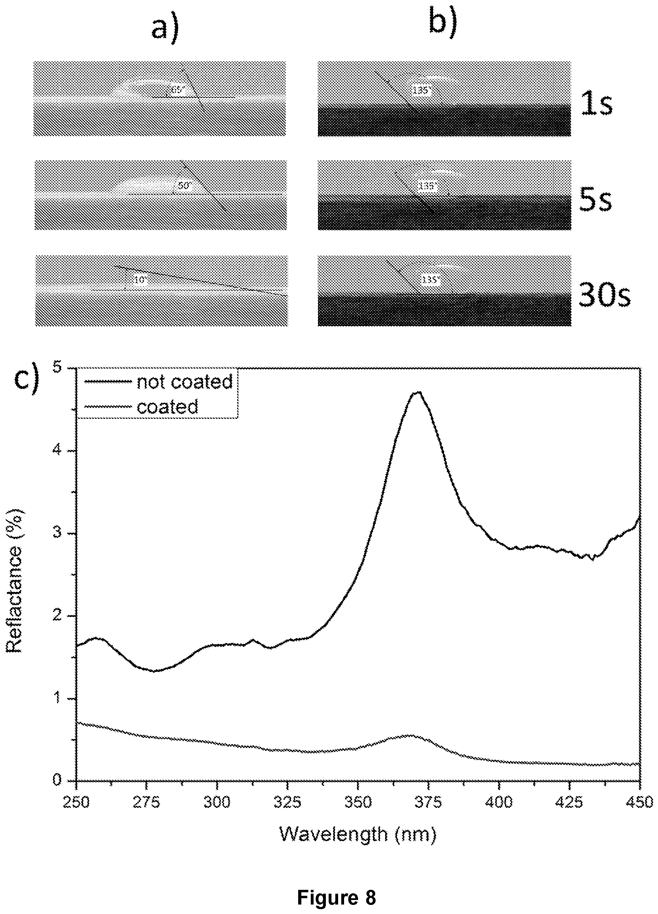

Uncoated balsa and GrBalsa were also tested for waterproofing. Contact angle observations of water on uncoated balsa and the GrBalsa are shown in Figures 8a and 8b respectively, in each case with the observations being made after 1s, 5s and 30s. The contact angle of water on uncoated balsa (Figure 8a) is equal to approximately 65° immediately after dropping the water, and quickly decreases to below 10° due to surface wetting and soaking. However, in the case of the GrBalsa (Figure 8b), the contact angle is much higher and is equal to approximately 135°. Moreover, in contrast to the pure balsa, the contact angle of the GrBalsa is stable and remains larger than 120° for longer than 10 minutes. Thus, a graphene coating stops water both from wetting balsa and from soaking into it.

Additional water tests show that the weight of an uncoated 1×1×0.6cm sample, which was fully immersed in water for 30s and then measured after approximately 4 minutes from removal from the water, increases by 319±62% due to water uptake, whereas the weight of a similar sample coated with graphene increases by only 118±10%.

Thus, these tests show that graphene-coated wood has improved water resistance compared to a corresponding piece of uncoated wood.

### UV light absorbance tests for graphene-based coatings on wood

Uncoated balsa and GrBalsa were also tested for UV light absorbance.

UV light absorbance was measured with an Ocean Optics QE65000 spectrometer. The measurement was performed in reflectance mode, an aluminium mirror was used as 100% reflective reference, and a deuterium lamp was used as the light source. The reflected light of uncoated balsa and GrBalsa was detected by the spectrometer for four GrBalsa samples and for four reference uncoated balsa samples, and the averaged spectra are plotted in Figure 8c (with uncoated balsa being the upper line, and GrBalsa being the lower line). It can be seen that GrBalsa reflects far more light then uncoated balsa in the UV range. The average decrease across the whole UV spectra is 3.2±0.7 times. Thus, the graphene coating acts as a UV light absorber, increasing the resistance of wood to UV light.

### Graphene-based coatings on wood - conclusions

The above results demonstrate the fire retardant properties of graphene-coated balsa wood and composites made up of coated blocks of wood in different geometric configurations. Simply coating a wooden block with graphene gave an interesting Mini Fire Tube result of much less mass loss compared to uncoated material. However, even more promising and striking results were obtained from graphene-wood composites having planes or layers of graphene therein (e.g. as illustrated in Figures 3, 5a and 5b). The flaming tests showed very limited propagation of fire between adjacent blocks, for both vertical propagation (with a structure as per Figure 3) and horizontal fire propagation (with a structure as per Figures 5a and 5b).

Based on the thermal camera videos it is clear that the main mechanism of fire retardancy is not based on high thermal conductivity, as the temperature was not heightened on the whole surface of composite. The more likely model is a formation of a barrier which prevents the contact and reaction of volatile gases with oxygen and thus impedes combustion process.

Thus, we expect the use of a graphene coating on wood to have great potential in civil or structural engineering applications, where domestic fires are caused mostly by wood based frames. Moreover, the internal structure of the graphene coating gives hydrophobicity and UV absorption, creating a multifunctional protective coating.

### (ii) Carbon nanotube-based coatings on wood

To demonstrate that carbon nanomaterials other than graphene are able to serve as multifunctional coatings on wood, with advantageous benefits, we have also investigated the use of carbon nanotube coatings on wood.

In the present work multiwall carbon nanotubes (MWCNTs) according to the following parameters were used:
Outer diameter 50-80 nm
Inner diameter 5-10 nm
Length 10-20 um
Active surface 60 m²/g
Resistivity 10⁻⁴ Ωm
Bulk density 0.18 g/cm³
Density 2.1 g/cm³
Purity >95%

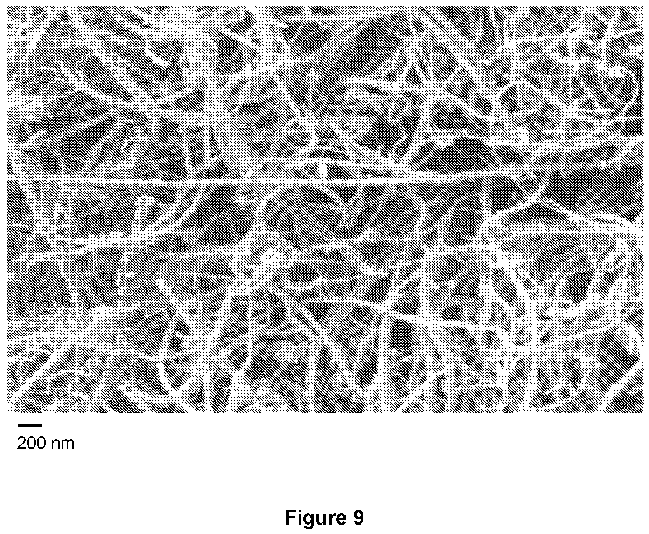

Figure 9 shows a scanning electron microscope (SEM) image of a sample of the MWCNTs used.

The use of coatings based on such MWCNTs was investigated using pine wood as a substrate. Pastes and inks were prepared containing the carbon nanotubes (CNTs) as the functional material, together with PMMA as a polymeric carrier, and acetone and nitromethane as solvents. Manual screen printing (painting/brushing), spray coating, and using a spatula (painting/spreading) were all successfully tested as application methods.

### Manual screen printing (painting/brushing)

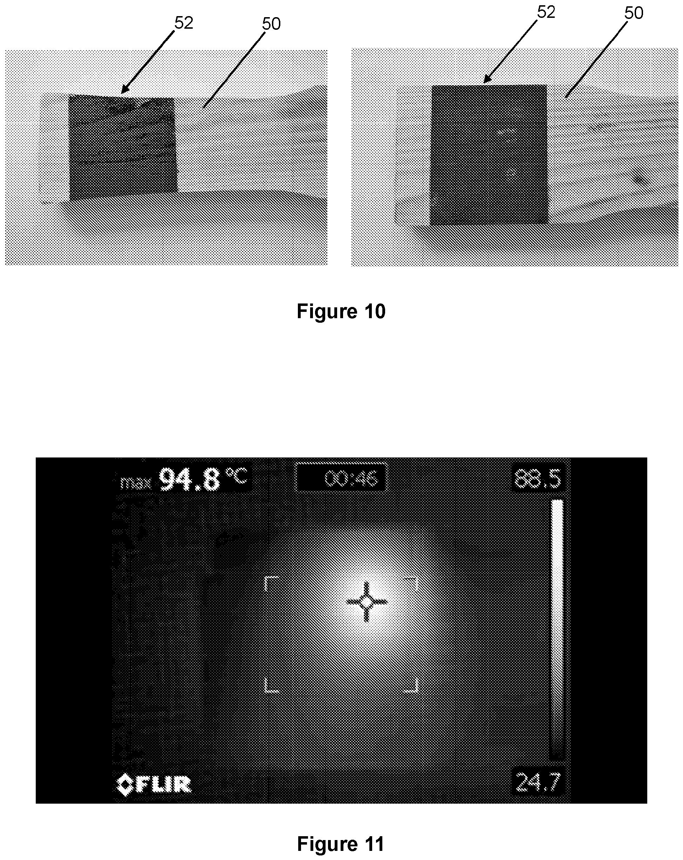

We made a carbon nanotube paste with 2.5wt% CNTs (having the parameters as described above) and 8% PMMA in butyl acetate carrier. Layers of the paste were applied to wooden testpieces using a manual screen printing process. The layers were dried in a commonly-used dryer chamber at 100°C for 45 minutes. The application procedure was performed twice, to produce a double layer coating. Figure 10 shows the wooden testpieces 50, with the CNT-based coating (the dark band 52) having been applied by screen printing. After drying, we estimate the thickness of the CNT layer on the wood to be about 20 µm. The surface resistivity was about 14kΩ/□.

In passing, we note that the above drying process resulted in the removal of some resin from the wood, which was incorporated into the CNT coating. Whilst this did not adversely affect the properties of the coating, the issue of resin incorporation into the coating will be addressed below.

The CNT coated surface 52 of the wood 50 was heated using a hot air blower and examined using an infrared camera. The thermal imaging (as shown in Figure 11, with the testpiece arrangement broadly corresponding to that as shown in the right hand image in Figure 10) shows little increase in thermal conductivity in the coated area, which we believe is as a result of the PMMA present in the coating.

However, as we expected, the little thermal conductivity did not impede the fire retardant properties of the CNT coating. This was demonstrated by fire retardancy tests, in which a match was manually coated (using a spatula) with the same PMMA-based CNT paste as mentioned above, and dried with a halogen lamp. For comparison uncoated and coated matches were burnt.

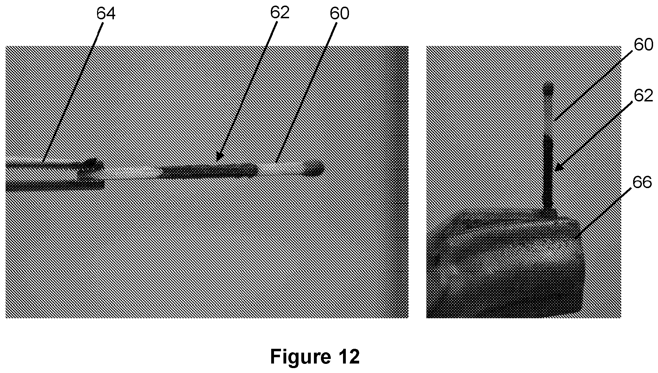

Figure 12 shows a match 60 with a CNT coating 62 held in laboratory pliers 64 (left-hand photograph) and in a grip 66 (right-hand photograph).

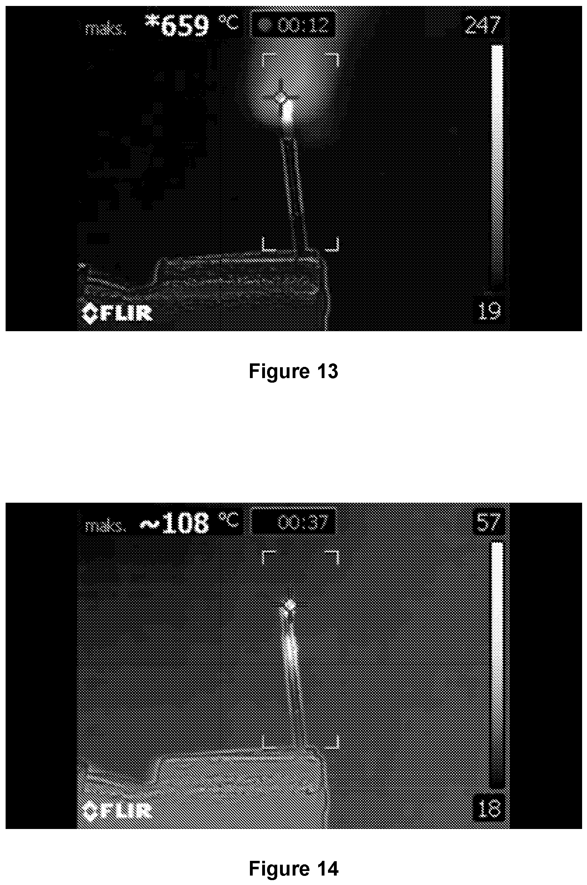

Figure 13 is a thermal image of the lighting of a CNT-coated match (as per Figure 12). Figure 14 is a thermal image of the match of Figure 13, showing fire extinguishing taking place in contact with the carbon nanotube layer.

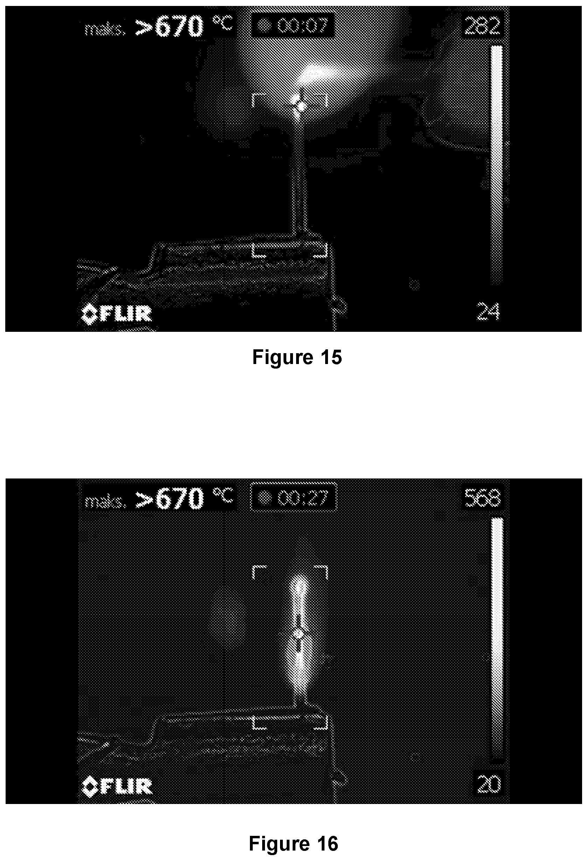

In contrast, Figure 15 is a thermal image of the lighting of a normal untreated match. Figure 16 is a thermal image of the match of Figure 15, continuously burning.

Comparing the thermal images of Figures 13 and 14 with those of Figures 15 and 16, this shows that the CNT coating on the match stops and extinguishes the fire. This demonstrates the non-flammability and fire retardant properties of a CNT coating on wood.

### Spray coating

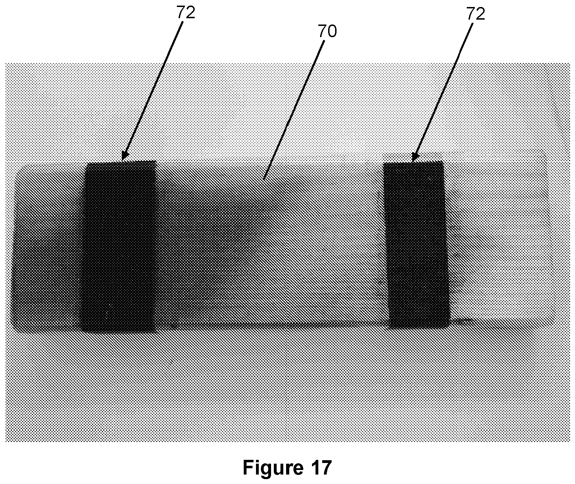

In the next research step we decided to apply a spray coating technique and to modify the drying method to eliminate the wood resin from the CNT layer. This time we used nitromethane as a solvent in ink composition. We mixed 0.12wt% CNT with nitromethane and ethylocellulose. Then we spray coated a wood substrate using an airbrush. The spraying process was performed several times to make a thick layer (each single layer coating being about 2-20 µm thick). To remove the wood resin from the CNT layer, samples were dried with a halogen lamp. The optimum drying time and distance from the lamp were experimentally determined as 3 minutes and 10 cm respectively. The layer resistivity was measured as being between 0.22 and 0.64 kΩ/□, and its thickness was estimated as being 150-200 µm after the drying process. The change of drying process (i.e. use of a halogen lamp) resulted in a better appearance of the resulting CNT layer, with a lack of wood resin therein. Figure 17 shows the resulting wood sample 70 on which a coating of CNTs 72 had been applied (in two places) by spray coating.

### Appendix - List of chemicals used for wood preservation

| **Name** | **Abbreviation** | **Application** |
|---|---|---|
| Acid Copper Chromate | ACC | Fungi, mould |
| Ammoniacal Copper Zinc Arsenate | ACZA | Fungi, mould |
| Chromated Copper Arsenate, types A, B, C, D | CCA | Fungi, mould |
| Alkaline Copper Quat | ACQ | Fungi, mould |
| Alkaline copper ethanolamine that utilizes 4,5-dichloro-2-N-octyl-4-isothiazolin-3-one | ACD | Fungi, mould |
| Copper-HDO (bis-(N-cyclo-hexyldiazeniumdioxy-copper)) | CDDC | Fungi, mould |
| Copper bis(dimethyldithiocarbamate) | CDDC | Fungi, mould |
| Copper Naphthenate | | Fungi, mould |
| Inorganic Boron (Borax-Boric Acid) | | Fire |
| Copper Azole | CA-B, CA-C and CBA-A | |
| Oxine copper | | |
| EL2 | | |
| Imidacloprid | | |
| KDS and KDS type B | | |
| Oligomeric Alkylphenol Polysulfide | PXTS | |
| Propiconazole and Tebuconazole | PTI | |
| Zinc chloride | | Fire |
| Coal-Tar Creosote and Creosote Solutions | | Insects |
| Pentachlorophenol Solutions | | |
| Copper Naphthenate | CuN | |
| Oxine Copper (copper-8-quinolinolate) | Cu8 | |
| Zinc Naphthenate | | |
| 3-lodo-2-Propynyl Butyl Carbamate | | |
| IPBC/Permethrin | | |
| Alkyl Ammonium Compounds | | |
| Chlorpyrifos | | |
| Anthracene oils (Carbolineums) | | |
| ESR-1721 | | |
| ESR-1980 | | |
| ESR-2067 | | |
| ESR-2240 | | |
| ESR-2325 | | |
| ESR-2711 | | |
| Sodium silicate-based preservatives | | Fire |
| Copper sulfate | | |
| Linseed oil | | Water |
| Bifenthrin | | Insects |
| Epoxy | | Water |
| Ammonium phosphates | | Fire |
| Polybrominated diphenyl ethers | PBDE | Fire |
| Expanding graphite | | Fire |
| Huntite | | Fire |
| Hydromagnesite | | Fire |
| Aluminium hydroxide | | Fire |
| Magnesium hydroxide | | Fire |
| Calcium formate | | Fire |
| Chloride Alkylbenzyldimethylammonium | | Fire |
| Boron compounds | | Fire |
| Ammonium salts of phosphoric and sulfuric acid | | Fire |
| N-methyl-2-pyrrolidone | | Fire |
| 2-metoksy-metyletoksy-propanol | | Fire |
| Ammonium compounds | | Fire |
| Sodium salt of benzoic acid | | Fire |
| Urea-formaldehyde-phosphate resin | | Fire |
| Diammonium phosphate | | Fire |
| Urea | | Filler |
| Phosphoric acid | | Hardener |
| Amino resin | | Filler |
| Benzyl C12-18 alkyldimethyl-ammonium chloride | | Fire |
| 3-iodo-2-propynyl-N-carbamate | | Fire |

### References

[1] M. J. Nine, M. A. Cole, D. N. H. Tran, D. Losic, J. Mater. Chem. A 2015, 3, 12580.
[2] K. S. Novoselov, V. I. Fal'ko, L. Colombo, P. R. Gellert, M. G. Schwab, K. Kim, Nature 2012, 490, 192.
[3] Caichao Wan, Yue Jiao, Jian Li, In situ deposition of graphene nanosheets on wood surface byone-pot hydrothermal method for enhanced UV-resistant ability, Applied Surface Science 347 (2015) 891-897
[4] S. Thongrattanasiri, F. H. L. Koppens, F. J. Garcia de Abajo, Phys. Rev. Lett. 2012, 108, 047401.
[5] D. D. Nguyen, N.-H. Tai, S.-B. Lee, W.-S. Kuo, Energy Environ. Sci. 2012, 5, 7908.

## Claims

1. A method of forming a composite structure (20; 40), the method comprising:
applying a carbon nanomaterial coating (14; 34) to each of a plurality of wooden elements (12; 32) to form a plurality of coated wooden elements (10; 30); and
using the plurality of coated wooden elements (10; 30) to form a composite structure (20; 40) having a plurality of carbon nanomaterial layers or planes (22; 42) within the composite structure, the carbon nanomaterial coatings (14; 34) of the wooden elements (12; 32) forming the carbon nanomaterial layers or planes (22; 42) within the composite structure;
wherein the carbon nanomaterial of each of the carbon nanomaterial coatings (14; 34), and thus of each of the plurality of carbon nanomaterial layers or planes (22; 42), comprises graphene.

2. A method as claimed in claim 1, wherein the carbon nanomaterial layers or planes (22) are oriented transversely within the composite structure (20).

3. A method as claimed in claim 1, wherein the carbon nanomaterial layers or planes (42) are oriented longitudinally within the composite structure (40).

4. A method as claimed in any preceding claim, further comprising a preliminary step of preparing or obtaining a dispersion comprising a liquid and a quantity of one or more carbon nanomaterials, and applying the dispersion to the surface of each of the plurality of wooden elements (12; 32) to thereby form the carbon nanomaterial coating (14; 34).

5. A method as claimed in claim 4, wherein the dispersion comprises from 0.001wt% to approximately 10wt% of carbon nanomaterials;
optionally wherein the dispersion comprises from 0.01wt% to approximately 10wt% of carbon nanomaterials;
optionally wherein the dispersion comprises from 0.1wt% to approximately 10wt% of carbon nanomaterials;
optionally wherein the dispersion comprises from 1wt% to approximately 10wt% of carbon nanomaterials.

6. A method as claimed in claim 4 or claim 5, wherein the liquid is selected from a group comprising: trichloromethane; poly(methyl methacrylate); acetone; nitromethane; water; linseed oil; inorganic solvents; polymers;
and/or wherein the dispersion further comprises a surfactant;
and/or wherein the dispersion further comprises a binder.

7. A method as claimed in any of claims 4 to 6, wherein applying the dispersion to the surface of each of the plurality of wooden elements (12; 32) is performed using a technique selected from a group comprising: dipping/steeping; painting/brushing; spray coating; temperature-assisted coating; pressure/vacuum assisted coating;
and/or wherein the dispersion is incorporated into a product selected from a group comprising: varnish; wood stain; paint; primer/undercoat.

8. A method as claimed in any preceding claim, wherein the carbon nanomaterial(s) further comprise carbon nanotubes;
and/or wherein the carbon nanomaterial(s) further comprise one or more nanomaterials selected from a group comprising: graphene oxide; functionalized nanocarbon forms; fullerenes; herringbone nanotubes; carbon nanocones/nanohorns.

9. A method as claimed in any preceding claim, wherein the carbon nanomaterial coating (14; 34) comprises at least 10% by volume of carbon nanomaterials;
optionally wherein the carbon nanomaterial coating (14; 34) comprises at least 30% by volume of carbon nanomaterials;
optionally wherein the carbon nanomaterial coating (14; 34) comprises at least 50% by volume of carbon nanomaterials.

10. A method as claimed in any preceding claim, wherein the carbon nanomaterial coating (14; 34) has a thickness in the range of 0.5 nm to 1 mm;
optionally wherein the carbon nanomaterial coating (14; 34) has a thickness in the range of 10 nm to 1 mm;
optionally wherein the carbon nanomaterial coating (14; 34) has a thickness in the range of 100 nm to 1 mm;
optionally wherein the carbon nanomaterial coating (14; 34) has a thickness in the range of 1 µm to 1 mm.

11. A composite structure (20; 40) comprising a plurality of coated wooden elements (10; 30), each of the coated wooden elements (10; 30) comprising a wooden element (12; 32) having a carbon nanomaterial coating (14; 34) thereon;
wherein the carbon nanomaterial coatings (14; 34) of the wooden elements (12; 32) form a plurality of carbon nanomaterial layers or planes (22; 42) within the composite structure (20; 40);
wherein the carbon nanomaterial of each of the carbon nanomaterial coatings (14; 34), and thus of each of the plurality of carbon nanomaterial layers or planes (22; 42), comprises graphene.

12. A composite structure as claimed in claim 11, wherein the carbon nanomaterial layers or planes (22) are oriented transversely within the composite structure (20);
or wherein the carbon nanomaterial layers or planes (42) are oriented longitudinally within the composite structure (40).

13. A composite structure as claimed in claim 11 or claim 12, wherein the carbon nanomaterial coating (14; 34) comprises at least 10% by volume of carbon nanomaterials;
optionally wherein the carbon nanomaterial coating (14; 34) comprises at least 30% by volume of carbon nanomaterials;
optionally wherein the carbon nanomaterial coating (14; 34) comprises at least 50% by volume of carbon nanomaterials;
and/or wherein the carbon nanomaterial coating (14; 34) further comprises a binder.

14. A composite structure as claimed in any of claims 11 to 13, wherein the carbon nanomaterial coating (14; 34) further comprises carbon nanotubes;
and/or wherein the carbon nanomaterial coating (14; 34) further comprises one or more nanomaterials selected from a group comprising: graphene oxide; functionalized nanocarbon forms; fullerenes; herringbone nanotubes; carbon nanocones/nanohorns.

15. A composite structure as claimed in any of claims 11 to 14, wherein the carbon nanomaterial coating (14; 34) has a thickness in the range of 0.5 nm to 1 mm;
optionally wherein the carbon nanomaterial coating (14; 34) has a thickness in the range of 10 nm to 1 mm;
optionally wherein the carbon nanomaterial coating (14; 34) has a thickness in the range of 100 nm to 1 mm;
optionally wherein the carbon nanomaterial coating (14; 34) has a thickness in the range of 1 µm to 1 mm.

## Patentansprüche

1. Verfahren zum Herstellen einer Verbundstruktur (20; 40), wobei das Verfahren Folgendes beinhaltet:
Aufbringen einer Kohlenstoff-Nanomaterialbeschichtung (14; 34) auf jedes von mehreren Holzelementen (12; 32) zum Bilden mehrerer beschichteter Holzelemente (10; 30); und
Verwenden der mehreren beschichteten Holzelemente (10; 30) zum Bilden einer Verbundstruktur (20; 40) mit mehreren Kohlenstoff-Nanomaterialschichten oder -ebenen (22; 42) innerhalb der Verbundstruktur, wobei die Kohlenstoff-Nanomaterialbeschichtungen (14; 34) der Holzelemente (12; 32) die Kohlenstoff-Nanomaterialschichten oder -ebenen (22; 42) innerhalb der Verbundstruktur bilden;
wobei das Kohlenstoff-Nanomaterial jeder der Kohlenstoff-Nanomaterialbeschichtungen (14; 34) und somit jeder der mehreren Kohlenstoff-Nanomaterialschichten oder - ebenen (22; 42) Graphen umfasst.

2. Verfahren nach Anspruch 1, wobei die Kohlenstoff-Nanomaterialschichten oder -ebenen (22) innerhalb der Verbundstruktur (20) quer orientiert sind.

3. Verfahren nach Anspruch 1, wobei die Kohlenstoff-Nanomaterialschichten oder -ebenen (42) innerhalb der Verbundstruktur (40) längs orientiert sind.

4. Verfahren nach einem vorherigen Anspruch, das ferner einen Vorabschritt des Herstellens oder Gewinnens einer Dispersion, die eine Flüssigkeit und eine Menge von einem oder mehreren Kohlenstoff-Nanomaterialien umfasst, und des Aufbringens der Dispersion auf die Oberfläche jedes der mehreren Holzelemente (12; 32) beinhaltet, um dadurch die Kohlenstoff-Nanomaterialbeschichtung (14; 34) zu bilden.

5. Verfahren nach Anspruch 4, wobei die Dispersion 0,001 Gew.-% bis etwa 10 Gew.-% Kohlenstoff-Nanomaterialien umfasst;
wobei die Dispersion optional 0,01 Gew.-% bis etwa 10 Gew.-% Kohlenstoff-Nanomaterialien umfasst;
wobei die Dispersion optional 0,1 Gew.-% bis etwa 10 Gew.-% Kohlenstoff-Nanomaterialien umfasst;
wobei die Dispersion optional 1 Gew.-% bis etwa 10 Gew.-% Kohlenstoff-Nanomaterialien umfasst.

6. Verfahren nach Anspruch 4 oder Anspruch 5, wobei die Flüssigkeit ausgewählt ist aus einer Gruppe, die Trichlormethan; Poly(methylmethacrylat); Aceton; Nitromethan; Wasser; Leinöl; anorganische Lösungsmittel; Polymere umfasst;
und/oder wobei die Dispersion ferner ein Tensid umfasst;
und/oder wobei die Dispersion ferner ein Bindemittel umfasst.

7. Verfahren nach einem der Ansprüche 4 bis 6, wobei das Aufbringen der Dispersion auf die Oberfläche jedes der mehreren Holzelemente (12; 32) mit einer Technik erfolgt, die aus einer Gruppe ausgewählt ist, die Eintauchen/Tränken; Streichen/Bürsten; Sprühbeschichten; temperaturunterstütztes Beschichten; druck-/vakuumunterstütztes Beschichten umfasst;
und/oder wobei die Dispersion in ein Produkt eingearbeitet wird, das aus einer Gruppe ausgewählt ist, die Lack; Holzbeize; Farbe; Primer/Grundierung umfasst.

8. Verfahren nach einem vorherigen Anspruch, wobei das/die Kohlenstoff-Nanomaterial(ien) ferner Kohlenstoff-Nanoröhrchen umfasst/-en;
und/oder wobei das/die Kohlenstoff-Nanomaterial(ien) ferner ein oder mehrere Nanomaterialien umfasst/-en, die aus einer Gruppe ausgewählt sind, die Graphenoxid; funktionalisierte Nanokohlenstoffformen; Fullerene; Fischgräten-Nanoröhrchen; Kohlenstoff-Nanokegel/Nanohörner umfasst.

9. Verfahren nach einem vorherigen Anspruch, wobei die Kohlenstoff-Nanomaterialbeschichtung (14; 34) mindestens 10 Vol.-% Kohlenstoff-Nanomaterialien umfasst;
wobei die Kohlenstoff-Nanomaterialbeschichtung (14; 34) optional mindestens 30 Vol.-% Kohlenstoff-Nanomaterialien umfasst;
wobei die Kohlenstoff-Nanomaterialbeschichtung (14; 34) optional mindestens 50 Vol.-% Kohlenstoff-Nanomaterialien umfasst.

10. Verfahren nach einem vorherigen Anspruch, wobei die Kohlenstoff-Nanomaterialbeschichtung (14; 34) eine Dicke im Bereich von 0,5 nm bis 1 mm hat;
wobei die Kohlenstoff-Nanomaterialbeschichtung (14; 34) optional eine Dicke im Bereich von 10 nm bis 1 mm hat;
wobei die Kohlenstoff-Nanomaterialbeschichtung (14; 34) optional eine Dicke im Bereich von 100 nm bis 1 mm hat;
wobei die Kohlenstoff-Nanomaterialbeschichtung (14; 34) optional eine Dicke im Bereich von 1 µm bis 1 mm hat.

11. Verbundstruktur (20; 40), die mehrere beschichtete Holzelemente (10; 30) umfasst, wobei jedes der beschichteten Holzelemente (10; 30) ein Holzelement (12; 32) mit einer Kohlenstoff-Nanomaterialbeschichtung (14; 34) darauf umfasst;
wobei die Kohlenstoff-Nanomaterialbeschichtungen (14; 34) der Holzelemente (12; 32) mehrere Kohlenstoff-Nanomaterialschichten oder -ebenen (22; 42) innerhalb der Verbundstruktur (20; 40) bilden;
wobei das Kohlenstoff-Nanomaterial jeder der Kohlenstoff-Nanomaterialbeschichtungen (14; 34) und somit jeder der mehreren Kohlenstoff-Nanomaterialschichten oder - ebenen (22; 42) Graphen umfasst.

12. Verbundstruktur nach Anspruch 11, wobei die Kohlenstoff-Nanomaterialschichten oder -ebenen (22) innerhalb der Verbundstruktur (20) quer orientiert sind;
oder wobei die Kohlenstoff-Nanomaterialschichten oder -ebenen (42) innerhalb der Verbundstruktur (40) längs orientiert sind.

13. Verbundstruktur nach Anspruch 11 oder Anspruch 12, wobei die Kohlenstoff-Nanomaterialbeschichtung (14; 34) mindestens 10 Vol.-% Kohlenstoff-Nanomaterialien umfasst;
wobei die Kohlenstoff-Nanomaterialbeschichtung (14; 34) optional mindestens 30 Vol.-% Kohlenstoff-Nanomaterialien umfasst;
wobei die Kohlenstoff-Nanomaterialbeschichtung (14; 34) optional mindestens 50 Vol.-% Kohlenstoff-Nanomaterialien umfasst;
und/oder wobei die Kohlenstoff-Nanomaterialbeschichtung (14; 34) ferner ein Bindemittel umfasst.

14. Verbundstruktur nach einem der Ansprüche 11 bis 13, wobei die Kohlenstoff-Nanomaterialbeschichtung (14; 34) ferner Kohlenstoff-Nanoröhrchen umfasst;
und/oder wobei die Kohlenstoff-Nanomaterialbeschichtung (14; 34) ferner ein oder mehrere Nanomaterialien umfasst, die aus einer Gruppe ausgewählt sind, die Graphenoxid; funktionalisierte Nanokohlenstoffformen; Fullerene; Fischgräten-Nanoröhrchen; Kohlenstoff-Nanokegel/Nanohörner umfasst.

15. Verbundstruktur nach einem der Ansprüche 11 bis 14, wobei die Kohlenstoff-Nanomaterialbeschichtung (14; 34) eine Dicke im Bereich von 0,5 nm bis 1 mm hat;
wobei die Kohlenstoff-Nanomaterialbeschichtung (14; 34) optional eine Dicke im Bereich von 10 nm bis 1 mm hat;
wobei die Kohlenstoff-Nanomaterialbeschichtung (14; 34) optional eine Dicke im Bereich von 100 nm bis 1 mm hat;
wobei die Kohlenstoff-Nanomaterialbeschichtung (14; 34) optional eine Dicke im Bereich von 1 µm bis 1 mm hat.

## Revendications

1. Procédé de formation d'une structure composite (20 ; 40), le procédé comprenant de :
appliquer un revêtement de nanomatériaux de carbone (14 ; 34) à chacun d'une pluralité d'éléments en bois (12 ; 32) pour former une pluralité d'éléments en bois revêtus (10 ; 30) ; et
utiliser la pluralité d'éléments en bois revêtus (10 ; 30) pour former une structure composite (20 ; 40) ayant une pluralité de couches ou de plans de nanomatériaux de carbone (22 ; 42) dans la structure composite, les revêtements de nanomatériaux de carbone (14 ; 34) des éléments en bois (12 ; 32) formant les couches ou plans de nanomatériaux de carbone (22 ; 42) au sein de la structure composite ;
dans lequel le nanomatériau de carbone de chacun des revêtements de nanomatériaux de carbone (14 ; 34), et donc de chacun de la pluralité de couches ou de plans de nanomatériaux de carbone (22 ; 42), comprend du graphène.

2. Procédé selon la revendication 1, dans lequel les couches ou plans de nanomatériaux de carbone (22) sont orientés transversalement au sein de la structure composite (20) .

3. Procédé selon la revendication 1, dans lequel les couches ou plans de nanomatériaux de carbone (42) sont orientés longitudinalement au sein de la structure composite (40).

4. Procédé selon l'une quelconque des revendications précédentes, comprenant en outre une étape préliminaire consistant à préparer ou à obtenir une dispersion comprenant un liquide et une quantité d'un ou plusieurs nanomatériaux de carbone, et à appliquer la dispersion à la surface de chacun de la pluralité d'éléments en bois (12 ; 32) pour former ainsi le revêtement de nanomatériaux de carbone (14 ; 34).

5. Procédé selon la revendication 4, dans lequel la dispersion comprend de 0,001 % en poids à environ 10 % en poids de nanomatériaux de carbone ;
éventuellement dans lequel la dispersion comprend de 0,01 % en poids à environ 10 % en poids de nanomatériaux de carbone ;
éventuellement dans lequel la dispersion comprend de 0,1 % en poids à environ 10 % en poids de nanomatériaux de carbone ;
éventuellement dans lequel la dispersion comprend de 1 % en poids à environ 10 % en poids de nanomatériaux de carbone.

6. Procédé selon la revendication 4 ou la revendication 5, dans lequel le liquide est choisi dans un groupe comprenant : trichlorométhane ; poly(méthacrylate de méthyle) ; acétone ; nitrométhane ; eau ; huile de lin ; solvants inorganiques ; polymères ;
et/ou dans lequel la dispersion comprend en outre un agent tensioactif ;
et/ou dans lequel la dispersion comprend en outre un liant.

7. Procédé selon l'une quelconque des revendications 4 à 6, dans lequel l'application de la dispersion à la surface de chacun de la pluralité d'éléments en bois (12 ; 32) est réalisée en utilisant une technique choisie dans un groupe comprenant : trempage rapide/trempage long ; peinture/badigeonnage ; revêtement par pulvérisation ; revêtement assisté par la température ; revêtement assisté par la pression/le vide ;
et/ou dans lequel la dispersion est incorporée dans un produit choisi dans un groupe comprenant : vernis ; teinture pour bois ; peinture ; apprêt/sous-couche.

8. Procédé selon l'une quelconque des revendications précédentes, dans lequel le ou les nanomatériaux de carbone comprennent en outre des nanotubes de carbone ;
et/ou dans lequel le ou les nanomatériaux de carbone comprennent en outre un ou plusieurs nanomatériaux choisis dans un groupe comprenant : oxyde de graphène ; formes de nanocarbones fonctionnalisées ; fullerènes ; nanotubes en arêtes de poissons ; nanocônes/nanocornets de carbone.

9. Procédé selon l'une quelconque des revendications précédentes, dans lequel le revêtement de nanomatériaux de carbone (14 ; 34) comprend au moins 10 % en volume de nanomatériaux de carbone ;
éventuellement dans lequel le revêtement de nanomatériaux de carbone (14 ; 34) comprend au moins 30 % en volume de nanomatériaux de carbone ;
éventuellement dans lequel le revêtement de nanomatériaux de carbone (14 ; 34) comprend au moins 50 % en volume de nanomatériaux de carbone.

10. Procédé selon l'une quelconque des revendications précédentes, dans lequel le revêtement de nanomatériaux de carbone (14 ; 34) a une épaisseur de l'ordre de 0,5 nm à 1 mm ;
éventuellement dans lequel le revêtement de nanomatériaux de carbone (14 ; 34) a une épaisseur de l'ordre de 10 nm à 1 mm ;
éventuellement dans lequel le revêtement de nanomatériaux de carbone (14 ; 34) a une épaisseur de l'ordre de 100 nm à 1 mm ;
éventuellement dans lequel le revêtement de nanomatériaux de carbone (14 ; 34) a une épaisseur de l'ordre de 1 µm à 1 mm.

11. Structure composite (20 ; 40) comprenant une pluralité d'éléments en bois revêtus (10 ; 30), chacun des éléments en bois revêtus (10 ; 30) comprenant un élément en bois (12 ; 32) ayant un revêtement de nanomatériaux de carbone (14 ; 34) sur celui-ci ;
dans laquelle les revêtements de nanomatériaux de carbone (14 ; 34) des éléments en bois (12 ; 32) forment une pluralité de couches ou de plans de nanomatériaux de carbone (22 ; 42) au sein de la structure composite (20 ; 40) ;
dans laquelle le nanomatériau de carbone de chacun des revêtements de nanomatériaux de carbone (14 ; 34), et donc de chacun de la pluralité de couches ou de plans de nanomatériaux de carbone (22 ; 42), comprend du graphène.

12. Structure composite selon la revendication 11, dans laquelle les couches ou plans de nanomatériaux de carbone (22) sont orientés transversalement au sein de la structure composite (20) ;
ou dans laquelle les couches ou plans de nanomatériaux de carbone (42) sont orientés longitudinalement au sein de la structure composite (40).

13. Structure composite selon la revendication 11 ou la revendication 12, dans laquelle le revêtement de nanomatériaux de carbone (14 ; 34) comprend au moins 10 % en volume de nanomatériaux de carbone ;
éventuellement dans laquelle le revêtement de nanomatériaux de carbone (14 ; 34) comprend au moins 30 % en volume de nanomatériaux de carbone ;
éventuellement dans laquelle le revêtement de nanomatériaux de carbone (14 ; 34) comprend au moins 50 % en volume de nanomatériaux de carbone ;
et/ou dans laquelle le revêtement de nanomatériaux de carbone (14 ; 34) comprend en outre un liant.

14. Structure composite selon l'une quelconque des revendications 11 à 13, dans laquelle le revêtement de nanomatériaux de carbone (14 ; 34) comprend en outre des nanotubes de carbone ;
et/ou dans laquelle le revêtement de nanomatériaux de carbone (14 ; 34) comprend en outre un ou plusieurs nanomatériaux choisis dans un groupe comprenant : oxyde de graphène ; formes de nanocarbones fonctionnalisées ; fullerènes ; nanotubes en arêtes de poissons ; nanocônes/nanocornets de carbone.

15. Structure composite selon l'une quelconque des revendications 11 à 14, dans laquelle le revêtement de nanomatériaux de carbone (14 ; 34) a une épaisseur de l'ordre de 0,5 nm à 1 mm ;
éventuellement dans laquelle le revêtement de nanomatériaux de carbone (14 ; 34) a une épaisseur de l'ordre de 10 nm à 1 mm ;
éventuellement dans laquelle le revêtement de nanomatériaux de carbone (14 ; 34) a une épaisseur de l'ordre de 100 nm à 1 mm ;
éventuellement dans laquelle le revêtement de nanomatériaux de carbone (14 ; 34) a une épaisseur de l'ordre de 1 µm à 1 mm.
